# FASCICULE DE BREVET EUROPEEN

(11) **EP 3 304 010 B1**
(45) Date de publication et mention de la délivrance du brevet: **15.12.2021**
(21) Numéro de dépôt: 16733641.1
(22) Date de dépôt: 27.05.2016
(51) Int. Cl.: G01F 23/72

(54) **CAPTEUR DE NIVEAU D'HUILE**
ÖLSTANDSENSOR
OIL LEVEL SENSOR

(30) Priorité: 29.05.2015 FR 1554919
(43) Date de publication de la demande: 11.04.2018
(73) Titulaire: Safran Aircraft Engines, 75015 Paris (FR)
(72) Inventeur: ROUX, Eloïse, Pauline, 77550 Moissy-Cramayel (FR)
(74) Mandataire: Ernest Gutmann - Yves Plasseraud S.A.S.
(86) Numéro de dépôt international: PCT/FR2016/051269
(87) Numéro de publication internationale: WO 2016/193593

(56) Documents cités:
- WO-A1-2007/106964
- WO-A1-2007/106964
- WO-A1-2014/114259
- CN-U- 202 057 390
- DE-A1- 19 949 096
- DE-A1- 19 949 096
- DE-B- 1 132 348
- DE-B- 1 132 348
- FR-A1- 2 716 532
- US-A1- 2013 160 871
- US-B1- 6 481 278
- US-B2- 6 502 461

## Description

L'invention se rapporte à un capteur de niveau de liquide, en particulier d'huile, (autrement appelé OLS -Oil Level Sensor-), pour les moteurs d'aéronefs à turbine à gaz, associé à un réservoir contenant le fluide dont on veut détecter le niveau. Les capteurs de niveau de liquide sont généralement connus par example dans US 6 650 461 B2 et CN 202 057 390 U.

Dans US 6 679 286 est divulgué un ensemble comprenant:
- un réservoir contenant un liquide, ici de l'eau,
- et un capteur de niveau de ce liquide, comprenant :
   -- un flotteur mobile le long de moyens de guidage et qui flotte sur le liquide du réservoir ou sur un volume de liquide en communication par le principe des vases communicants avec le liquide du réservoir, pour que le flotteur se déplace avec le niveau de liquide dans le réservoir,
   -- au moins un aimant permanent mobile avec le flotteur,
   -- une carte électronique pourvue d'interrupteurs magnétiques sensibles audit aimant.

Un problème de cette installation est qu'en cas de décentrage sur la longueur des moyens de guidage, le rattrapage des tolérances de coaxialité par rapport au centrage supérieur risque d'être opéré par le capteur de niveau de liquide qui supporte l'effort lié au désaxage en se déformant. Cette déformation peut fragiliser le capteur et peut entrainer sa rupture.

On peut alors être amené à renforcer le capteur dans ses zones sensibles. Ce renforcement augmente toutefois la masse du capteur, ce qui a un impact sur le design du réservoir (tenue mécanique) et donc sur la consommation du moteur. Et ce problème est d'autant plus important lorsque le réservoir est monté rigide sur le moteur (pas d'amortisseurs). Les vibrations subies par le capteur sont alors plus importantes, entrainant davantage de contraintes dans le capteur.

Un autre problème concerne les risques de coincement du flotteur le long de ses moyens de guidage.

En effet, afin que le flotteur coulisse le long des moyens de guidage (un tube dans US 6 679 286), un certain jeu est laissé entre le flotteur et le tube. Or, si le flotteur se coince en se mettant en biais le long du tube, l'information de niveau d'huile fournie par le capteur est alors erronée car le flotteur ne suit plus le changement de hauteur d'huile restante dans le réservoir.

Un but de la présente invention est d'apporter une solution à cela, en assurant une fiabilité de fonctionnement, avec une masse et des contraintes mécaniques maîtrisées.

L'ensemble selon la présente invention est défini dans la revendication indépendante 1 annexée.

L'invention sera éventuellement mieux comprise et d'autres détails, caractéristiques et avantages la concernant pourront apparaître encore plus clairement à la lecture de la description qui suit, faite à titre d'exemple non limitatif et en référence aux dessins annexés, dans lesquels :
- les figures 1 et 5 schématisent un ensemble réservoir et capteur d'huile, suivant deux réalisations intéressantes possibles,
- les figures 2 et 3 sont deux schémas, respectivement en coupe transversale II-II et en coupe axiale (zone III de la figure 1),
- la figure 4 est un schéma en élévation d'une carte électronique convenant pour l'invention, sur les autres figures,
- et la figure 6 est un schéma suivant la coupe transversale VI-VI.

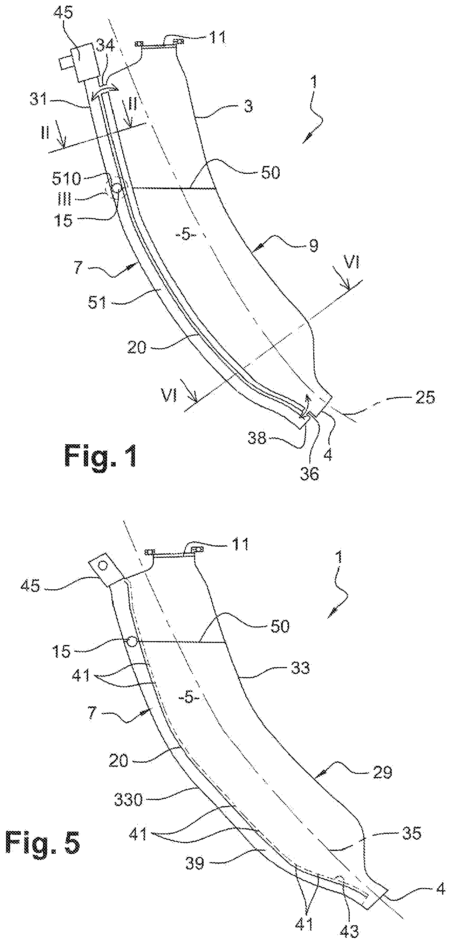

Figure 1, on voit ainsi un ensemble fonctionnel 1 comprenant un réservoir 3 contenant un liquide, ici de l'huile, 5, et un capteur 7 de niveau d'huile destiné à détecter le niveau 50 de l'huile dans ce réservoir.

Le réservoir 3, à fond fermé 4, est une pièce allongée appartenant à une enceinte 9 qui présente, ici à son sommet, une ouverture 11 permettant un retour de l'huile dans le réservoir. Une autre ouverture, non représentée, sert au remplissage manuel du réservoir 3.

Des pattes de fixation (non représentées) peuvent permettre de fixer rigidement le réservoir 3 à une partie fixe structurelle du moteur d'aéronef concerné.

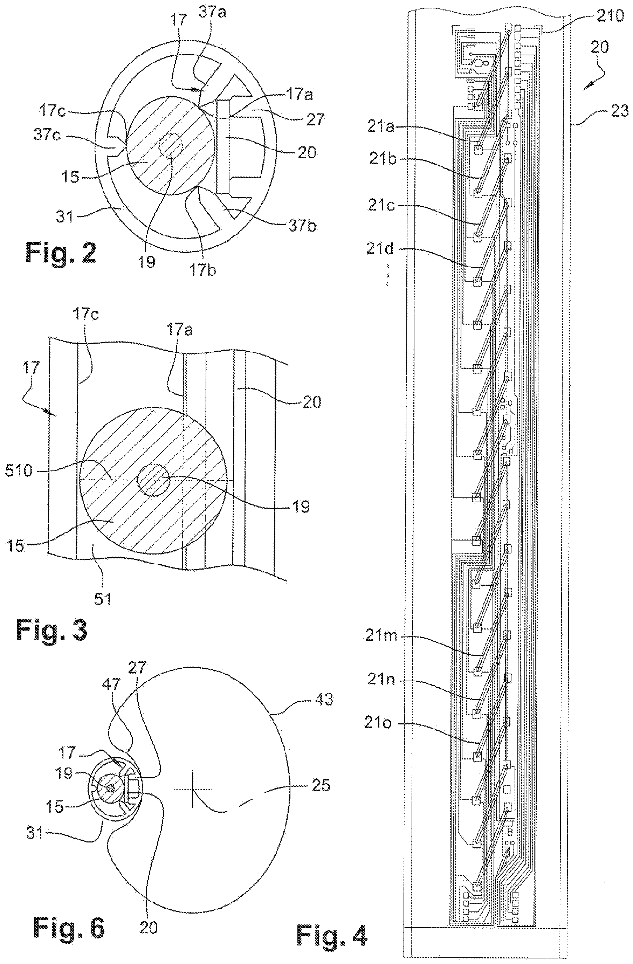

Le capteur 7 comprend :
- un flotteur 15 mobile le long de moyens de guidage 17 (voir figures 2,3) et qui flotte sur un volume d'huile 51 (surface libre 510) en communication par le principe des vases communicants avec l'huile 5 du réservoir, pour que le flotteur se déplace avec le niveau d'huile dans le réservoir,
- au moins un aimant permanent 19 mobile avec le flotteur,
- et une carte électronique 20 pourvue d'interrupteurs magnétiques, ou commutateurs à lames (reed switches en anglais), 21a, 21b...21o (figure 4) sensibles au magnétisme de l'aimant 19.

Dans l'exemple privilégié, le flotteur est sphérique. Toutefois sa forme n'influe pas sur la qualité de l'information tant que l'aimant 19 peut fermer les commutateurs ou interrupteurs de la carte électronique 20. Ainsi, le flotteur 15 pourrait être monté dans une douille à billes ou à rouleaux par exemple. En d'autres termes, le flotteur 15 présentera favorablement une surface extérieure convexe.

Le principe de fonctionnement de la carte électronique 20, avec ses interrupteurs magnétiques 21a, 21b...21o (figure 4) qui interagissent avec l'aimant 19 est connu. Ce n'est pas l'objet de l'invention. La figure 4 (extraite de US 4 976 146) schématise ainsi uniquement un exemple de réalisation, avec une carte de circuit imprimé 210 qui est positionnée sur une pluralité de commutateurs à lames espacées généralement indiqué par le numéro de référence 21 et qui comprend des commutateurs individuels 21a et al. Un conduit non magnétique 23 tel que du PVC ou une fibre de verre entoure et protège la carte de circuit 210 et les commutateurs 21, du liquide environnant.

La carte électronique 20 est allongée et est disposée, avec les commutateurs 21, pour s'étendre ainsi tout le long du chemin pouvant être parcouru par le flotteur 15 dans son suivi de niveau d'huile.

Une liaison électrique appropriée est établie entre la carte de circuit imprimé 210 et la matrice de commutateurs à lames 21 pour le raccordement à un moyen d'indication (tel un afficheur non représenté) permettant d'indiquer la position verticale du flotteur 15 par rapport aux commutateurs 21. Ainsi, lorsque le niveau 50 du liquide change, celui 510 change aussi et le flotteur 15 se déplace par rapport aux commutateurs 21, fournissant ainsi un affichage du niveau 50 du liquide. Comme cela est classique, les commutateurs à lames 21 (appelés « commutateurs reed ») peuvent être constitués de premier et second conducteurs qui, lorsqu'ils sont exposés au même pôle d'un champ magnétique extérieur, sont repoussés en fermant alors le passage du courant, tandis que quand les fils sont exposés à des pôles opposés de ce magnétisme, les fils extérieurs sont attirés l'un par l'autre et ferment le commutateur.

Indépendamment de la manière de réaliser la carte 20 et les communications sans fil à établir entre l'aimant 19 du flotteur et les commutateurs 21, une caractéristique notable réside dans le fait que les moyens 17 de guidage du flotteur sphérique 15 sont disposés autour du flotteur et ont avec ledit flotteur des contacts, ou appuis, limités à trois zones sensiblement linéaires repérées 17a,17b,17c figure 2 ; voir aussi figure 3.

Ainsi, on va assurer un guidage isostatique et pouvoir adapter le montage de la solution ci-avant sur des réservoirs 3, 33,43 (figures 1,5,6) à profil longitudinal général (25 figures 1,6 ; 35 figure 5) courbe ou incurvé, et pas uniquement rectiligne comme celui de US 6 679 286. On aura compris que le profil longitudinal général est la ligne générale suivant laquelle se déplace le flotteur et donc suivant laquelle doit sensiblement s'étendre longitudinalement la carte de circuit 210 et les commutateurs 21.

Les trois zones 17a,17b,17c sont sensiblement linéaires dès lors qu'elles définissent leurs contacts avec la sphère 15 suivant globalement des lignes (ou des surfaces de faibles épaisseurs, de l'ordre par exemple du mm). D'ailleurs, figure 2, on voit que les extrémités libres des trois zones 17a,17b,17c de contact peuvent définir chacune une pointe ou une partie effilée.

Les vues des figures 2 et 3 montrent que les trois zones de contact 17a,17b,17c seront ainsi favorablement définies par trois rails allongés à contacts donc sensiblement linéaires avec la surface extérieure de la sphère 15. L'allongement suivra le profil considéré, tel 25 ou 35.

La carte électronique 20, fixée à son support 27, se trouve juste en face de la sphère 15.

Plus précisément, la carte électronique pourvue des interrupteurs magnétiques 21 est située latéralement par rapport à la direction d'allongement 25 ou 35, à l'écart (autour) du volume circonscrit par lesdites trois zones de contact.

Ainsi, l'efficacité quant au libre coulissement guidé du flotteur 15, donc à la qualité et fiabilité des mesures, sera optimum et ce d'autant plus si, comme illustré, l'aimant permanent 19 est situé au centre du flotteur sphérique, un unique tel aimant s'avérant suffisant.

Comme déjà indiqué, l'aimant 19 pourra en particulier être sphérique ; et le flotteur plein, de manière que sa matière maintienne l'aimant centré. Comme tenu de ce que le flotteur 15 présentera plus généralement une surface extérieure favorablement convexe, un aimant centré derrière une telle surface, qui pourra tourner sans décentrer l'aimant, pourra être favorable à l'effet recherché.

Dans la solution de la figure 1, un tube 31 extérieur au réservoir 3 et relié à lui communique avec ce réservoir pour la circulation de l'huile.

Dans l'exemple, deux orifices 34,36 de communication sont prévus, ici respectivement vers le sommet et le fond inférieur fermé 38 du tube 31.

Le principe des vases communicants pour l'huile est assuré par l'orifice inférieur 36. Si le tube 31 est assez rigide, sa tenue et sa liaison mécanique avec le réservoir 3 pourra être assurée uniquement par les deux courtes tubulures transversales présentant les orifices 34,36.

Allongés linéairement suivant le profil incurvé, tel 25 ou 35, les trois bras 37a,37b,37c chacun porteur d'une zone de contact font saillie individuellement intérieurement du tube 31. Ils sont répartis à 120° les uns des autres, autour du flotteur sphérique 15.

Maintenue le long de ces moyens, entre deux bras, par son(ses) supports 27, par exemple par collage, la carte électronique 20 s'étend aussi sensiblement suivant ledit profil.

Pour cela, deux possibilités en particulier : la carte est rigide par exemple en polymide, mais a été préformée pour suivre le profil incurvé ou curviligne qui convient, ou cette carte électronique 20 pourvue des interrupteurs magnétiques sensibles audit aimant est flexible, par exemple à base de graphène.

Par rapport à la réalisation de la figure 1, celle de la figure 5 présente les différences suivantes : les moyens de guidage, avec lesdites trois zones de contact, le flotteur sphérique 15 et la carte électronique 20 sont disposés dans le réservoir 33, au sein d'un espace 39 qui, pour la circulation de l'huile, communique par des orifices 41 avec le réservoir 33, élément de l'enceinte 29. La différence de l'enceinte 29 par rapport à l'enceinte 9 est donc que le réservoir 33 intègre le capteur 7 qui longeait extérieurement le réservoir 3 figure 1.

Les orifices 41 peuvent être formés, tout le long de la carte 20, dans une paroi tubulaire 43 fermée localement par une zone 330 pleine du réservoir 33. Les trois bras 37a,37b,37c de la figure 2 dressés longitudinalement feront dans ce cas saillie intérieurement, certains de la paroi tubulaire 43, un autre de la zone 330. Des supports comme les pattes 27 pourront maintenir la carte 20 le long de la paroi tubulaire 43 qui sera donc longitudinalement et comme illustré, sensiblement à la forme du profil 35, comme l'était la ligne générale du tube 31 avec le profil 25.

Figures 1 et 5, on notera encore qu'au sommet du réservoir, le capteur 7, et plus particulièrement la carte 20, est relié(e) à un connecteur 45 par lequel les informations de niveau d'huile détectées par le dispositif à interrupteurs magnétiques 21 pourront être adressées vers le système de traitement adéquat du moteur d'aéronef.

Figure 6 maintenant : dans cette version, le réservoir, ici référencé 43, présente, comme différence par rapport au réservoir 3, un creux longitudinal d'encastrement 47 dans lequel le tube extérieur 31 a été disposé. Le creux 47 s'étend le long et sensiblement à la forme du profil 25.

La liaison fluide et de maintien relatif pourront de nouveau être obtenus par les deux courtes tubulures transversales présentant respectivement les orifices 34,36 (non visibles figure 6).

Cette variante permet de limiter l'encombrement et de rigidifier le réservoir.

En termes d'avantages, on peut aussi noter :
- limitation, voire suppression, de certaines contraintes d'installation, car le capteur épouse les formes du réservoir (plus besoin de support intermédiaire dans le réservoir),
- gain de masse via la suppression de ce support intermédiaire et des renforcements mécaniques fréquents dans le corps du capteur, et à la diminution du nombre de guidages pour le flotteur sphérique (rails).

L'invention est applicable à tout type de sonde de niveau installée dans un réservoir de fluide.

## Revendications

1. Ensemble comprenant:
- un réservoir (3,33,43) contenant un liquide,
- des moyens (17) de guidage d'un flotteur suivant un chemin,
- un capteur (7) du niveau de liquide, comprenant :
-- le flotteur (15) qui, mobile suivant ledit chemin le long des moyens de guidage (17),flotte sur le liquide du réservoir ou sur un volume de liquide en communication par le principe des vases communicants avec le liquide du réservoir, pour que le flotteur se déplace avec le niveau de liquide dans le réservoir,
-- au moins un aimant permanent (19) mobile avec le flotteur,
-- une carte électronique (20) pourvue d'interrupteurs magnétiques (21) sensibles audit aimant, la carte électronique étant allongée et disposée, avec les interrupteurs magnétiques, pour s'étendre tout le long du chemin suivant lequel le flotteur (15) est mobile,
**caractérisé en ce que** :
le réservoir est à profil longitudinal général courbe et pas uniquement rectiligne,
les moyens (17) de guidage du flotteur sont disposés autour du flotteur et
ont avec ledit flotteur des contacts limités à trois zones sensiblement linéaires (17a,17b,17c) allongées suivant ledit profil, et
la carte électronique (20), maintenue le long desdits moyens de guidage (17), est allongée sensiblement suivant ledit profil et située latéralement à l'écart du volume circonscrit par les trois zones de contact (17a,17b,17c),.

2. Ensemble selon la revendication 1, dans lequel les trois zones de contact (17a,17b,17c) sont définies, pour les moyens de guidage, par trois rails à contacts sensiblement linéaires.

3. Ensemble selon la revendication 1 ou 2, dans lequel la carte électronique (20) pourvue des interrupteurs magnétiques (21) sensibles audit aimant est flexible.

4. Ensemble selon l'une des revendications 1 à 3, dans lequel les moyens de guidage (17), avec lesdites trois zones de contact (17a,17b,17c), le flotteur (15) et la carte électronique (20) sont disposés dans le réservoir (33), au sein d'un espace qui, pour la circulation du liquide, communique avec le réservoir par des orifices (41).

5. Ensemble selon l'une des revendications 1 à 3, qui comprend en outre un tube (31) extérieur au réservoir (3,43) relié à lui et qui communique avec lui pour la circulation du liquide, le tube extérieur contenant les moyens de guidage (17) avec lesdites trois zones de contact (17a,17b,17c), le flotteur (15) et la carte électronique (20), le réservoir étant allongé suivant un profil incurvé (25,35) le long duquel s'étendent sensiblement et linéairement lesdites trois zones de contact, et les moyens de guidage avec lesdites trois zones de contact.

6. Ensemble selon la revendication 5, dans lequel le réservoir (43) présente un creux longitudinal (47) d'encastrement dans lequel le tube (31) est disposé.

7. Turbomachine comprenant un ensemble selon l'une des revendications 1 à 6.

## Patentansprüche

1. Anordnung, enthaltend:
- einen Tank (3, 33, 43), der eine Flüssigkeit enthält,
- Führungsmittel (17) zum Führen eines Schwimmers entlang eines Pfads,
- einen Flüssigkeitspegelsensor (7), enthaltend:
-- den Schwimmer (15), der dem Pfad entlang der Führungsmittel (17) folgend beweglich auf der Flüssigkeit im Tank oder auf einem Flüssigkeitsvolumen schwimmt, das nach dem Prinzip kommunizierender Gefäße mit der Flüssigkeit in dem Tank in Verbindung steht, so dass sich der Schwimmer mit dem Flüssigkeitspegel in dem Tank bewegt,
-- mindestens einen Permanentmagneten (19), der mit dem Schwimmer beweglich ist,
-- eine elektronische Karte (20), die mit magnetischen Schaltern (21) versehen ist, die auf den Magneten ansprechen, wobei die elektronische Karte langgestreckt ist und mit den magnetischen Schaltern angeordnet ist, um sich entlang des gesamten Pfads zu erstrecken, entlang welchem der Schwimmer (15) beweglich ist,
**dadurch gekennzeichnet, dass**
der Tank ein gekrümmtes und nicht nur geradliniges Längsprofil aufweist, die Führungsmittel (17) zum Führen des Schwimmers um den Schwimmer herum angeordnet sind und mit dem Schwimmer Kontakte haben, die auf drei im Wesentlichen lineare Bereiche (17a, 17b, 17c), die entlang des Profils langgestreckt sind, begrenzt sind, und
die elektronische Karte (20), die entlang der Führungsmittel (17) gehalten wird, im Wesentlichen entlang des Profils langgestreckt ist und sich seitlich im Abstand von dem Volumen befindet, das von den drei Kontaktbereichen (17a, 17b, 17c) umschrieben ist.

2. Anordnung nach Anspruch 1, wobei die drei Kontaktbereiche (17a, 17b, 17c) für die Führungsmittel durch drei im Wesentlichen lineare Kontaktschienen definiert sind.

3. Anordnung nach Anspruch 1 oder 2, wobei die elektronische Karte (20), die mit auf den Magneten ansprechenden Magnetschaltern (21) versehen ist, flexibel ausgeführt ist.

4. Anordnung nach einem der Ansprüche 1 bis 3, wobei die Führungsmittel (17) mit den drei Kontaktbereichen (17a, 17b, 17c), der Schwimmer (15) und die elektronische Karte (20) in dem Tank (33) innerhalb eines Raums angeordnet sind, der für die Zirkulation der Flüssigkeit über Öffnungen (41) mit dem Tank kommuniziert.

5. Anordnung nach einem der Ansprüche 1 bis 3, ferner enthaltend eine Röhre (31) außerhalb des Tanks (3, 43), die mit diesem verbunden ist und für die Zirkulation der Flüssigkeit mit diesem kommuniziert, wobei die äußere Röhre die Führungsmittel (17) mit den drei Kontaktbereichen (17a, 17b, 17c), den Schwimmer (15) und die elektronische Karte (20) enthält, wobei der Tank gemäß einem gekrümmten Profil (25, 35) langgestreckt ist, entlang dessen sich die drei Kontaktbereiche und die Führungsmittel mit den drei Kontaktbereichen im Wesentlichen linear erstrecken.

6. Anordnung nach Anspruch 5, wobei der Tank (43) eine Einbettungslängsausnehmung (47) aufweist, in der die Röhre (31) angeordnet ist.

7. Turbomaschine bzw. Turbotriebwerk mit einer Anordnung nach einem der Ansprüche 1 bis 6.

## Claims

1. An assembly comprising:
- a tank (3, 33, 43) containing a liquid, such as oil,
- means (17) for guiding a float along a way,
- a fluid level sensor (7) comprising:
-- the float (15) which, movable on said way along the guide means (17), is floating on the liquid of the tank or on a volume of the liquid in communication with the liquid in the tank, according to the principle of communicating vessels, so that the float can move with the liquid level in the tank,
-- at least one permanent magnet (19) movable with the float,
-- an electronic card (20) provided with magnetic switches (21) sensitive to said magnet, the being elongated and disposed, with the magnetic switches (21), on all the way along which the float (15) is movable.
**characterized in that**:
the tank has a globally longitudinal profile which is curved, and not only rectilinear,
the guide means (17) of the float are positioned about the float and the contacts thereof with said float are limited to three substantially linear zones (17a,17b,17c), and
the electronic card (20), which is maintained along said guide means (17),
is elongated according to said profile and located laterally apart from the volume limited by the three contact zones (17a,17b,17c).

2. An assembly according to claim 1, wherein the three contact zones (17a,17b,17c) are defined, for the guide means, by three rails having substantially linear contacts.

3. An assembly according to claim 1 or 2, wherein the electronic card provided with the magnetic switches (21) sensitive to said magnet is flexible.

4. An assembly according to one of claims 1 to 3, wherein guide means (17) with said three contact zones (17a,17b,17c), the float (15) and the electronic card (20) are positioned in the tank (33), within a space which communicates with the tank through orifices (41) for the fluid to circulate.

5. An assembly according to one of claims 1 to 3, which further comprises a tube (31) located outside the tank (3, 43), connected therewith and which communicates therewith for the liquid to circulate, with the external tube containing the guide means (17) with said three contact zones (17a,17b,17c), the float (15) and the electronic card (20), the tank further extending along a curved profile (25,35) along which substantially and linearly extend said three contact zones and the guide means with said three contact zones.

6. An assembly according to claim 5, wherein the tank (43) has a longitudinal recess (47) for embedding, wherein the external tube (31) is positioned.

7. A turbine engine according to one of claims 1 to 6.
